# EUROPEAN PATENT APPLICATION

(11) **EP 4 503 165 A1**
(43) Date of publication of application: **05.02.2025**
(21) Application number: 22960039.0
(22) Date of filing: 29.09.2022
(51) Int. Cl.: H01M 4/13

(54) **SECONDARY BATTERY AND ELECTRIC DEVICE**

(71) Applicant: Contemporary Amperex Technology Co., Limited, Fujian 352100 (CN)
(72) Inventor: XU, Hu, Ningde City, Fujian 352100 (CN); JIN, Haizu, Ningde City, Fujian 352100 (CN); ZHAO, Fenggang, Ningde City, Fujian 352100 (CN); OUYANG, Chuying, Ningde City, Fujian 352100 (CN); NIU, Shaojun, Ningde City, Fujian 352100 (CN)
(74) Representative: Kraus & Lederer PartGmbB
(86) International application number: PCT/CN2022/122628
(87) International publication number: WO 2024/065402

(57) **Abstract**

This application provides a secondary battery and an electrical device. The secondary battery includes a current collector and a negative film layer. The negative film layer includes: a first film layer, disposed on at least one surface of the current collector, where the first film layer includes a first negative active material; a second film layer, disposed on a surface of the first film layer, where the surface is away from the current collector, and the second film layer includes a second negative active material. A volume distribution diameter Dv₅₀ of the first negative active material is greater than a volume distribution diameter Dv₅₀ of the second negative active material, and a powder compaction density of the first negative active material is greater than the powder compaction density of the second negative active material under a same pressure. Through balanced design of the powder compaction density and particle diameter of the negative active material, the two film layers compensate for each other in terms of porosity and pore size, thereby balancing electrolyte infiltration performance of the two film layers to prevent the upper second film layer from being over-lithiation or over-sodiation, improving the cycle performance of the secondary battery, and increasing the lifespan of the secondary battery.

## Description

### TECHNICAL FIELD

This application relates to the field of battery technology, and in particular, to a secondary battery and an electrical device.

### BACKGROUND

As technology develops and demand for mobile devices increases, the demand to use a secondary battery as an energy source is rapidly increasing. Among the secondary batteries, a lithium secondary battery characterized by a high energy density, a high operating potential, a long cycle life, and a low self-discharge rate has been commercially available and widely used.

With the development of the new energy industry, people have put forward higher requirements on the secondary batteries in use. However, the energy density of the secondary batteries is usually increased with an adverse effect on the kinetic properties and service life of the batteries. Therefore, how to achieve a high energy density without compromising other electrochemical properties is a key challenge in the battery design field.

### SUMMARY

This application provides a secondary battery and an electrical device to further improve the cycle performance of the secondary battery.

A first aspect of this application provides a secondary battery, including a current collector and a negative film layer. The negative film layer includes: a first film layer, disposed on at least one surface of the current collector, where the first film layer includes a first negative active material; a second film layer, disposed on a surface of the first film layer, where the surface is away from the current collector, and the second film layer includes a second negative active material. A volume distribution diameter Dv₅₀ of the first negative active material is greater than a volume distribution diameter Dv₅₀ of the second negative active material, and a powder compaction density of the first negative active material is greater than the powder compaction density of the second negative active material under a same pressure.

Through balanced design of the powder compaction density and particle diameter of the negative active material between an upper film layer and a lower film layer, this application causes the two film layers to compensate for each other in terms of porosity and pore size, thereby balancing electrolyte infiltration performance of the two film layers to prevent the upper second film layer from being over-lithiation or over-sodiation, effectively avoiding precipitation of metal on the second film layer, improving the cycle performance of the secondary battery, and increasing the lifespan of the secondary battery.

In any embodiment, the volume distribution diameter Dv₅₀ of the first negative active material is denoted as D1, and the volume distribution diameter Dv₅₀ of the second negative active material is denoted as D2, satisfying: 1 < D1/D2 ≤ 3.0, and optionally 1.3 ≤ D1/D2 ≤ 2.8. This further improves the electrolyte infiltration performance of the two film layers, and further improves the cycle performance of the secondary battery.

In any embodiment, the powder compaction density of the first negative active material under a pressure of 30000 N is denoted as PD1, and the powder compaction density of the second negative active material under a pressure of 30000 N is denoted as PD2, satisfying: 1 < PD1/PD2 ≤ 2.0, optionally 1.03 ≤ PD1/PD2 ≤ 1.5, and further optionally 1.05 ≤ PD1/PD2 ≤ 1.3. This further improves the cycle performance of the secondary battery.

In any embodiment, the volume distribution diameter Dv₅₀ of the first negative electrode material is 5 µm to 30 µm, optionally 7 µm to 28 µm, and further optionally 8 µm to 26 µm; and/or the volume distribution diameter Dv₅₀ of the second negative electrode material is 2 µm to 20 µm, optionally 3 µm to 15 µm, and further optionally 6 µm to 15 µm. This further improves the cycle performance of the secondary battery.

In any embodiment, the powder compaction density PD1 of the first negative active material under a pressure of 30000 N is 1.2 g/cm³ to 2.5 g/cm³, and optionally 1.5 g/cm³ to 2.0 g/cm³. Optionally, the powder compaction density PD2 of the second negative active material under a pressure of 30000 N is 1.0 g/cm³ to 2.0 g/cm³, optionally 1.2 g/cm³ to 1.8 g/cm³, further optionally 1.2 g/cm³ to 1.65 g/cm³, and further optionally 1.55 g/cm³ to 1.6 g/cm³. This further improves the cycle performance of the secondary battery.

In any embodiment, the first negative active material further satisfies one or more of the following conditions (1) to (4): (1) a volume distribution diameter Dv₁₀ of the first negative active material is 4 µm to 15 µm, and optionally 5 µm to 11 µm; (2) a volume distribution diameter Dv₉₀ of the first negative active material is less than or equal to 45 µm, and preferably 15 µm to 35 µm; (3) a specific surface area SSA of the first negative active material is less than or equal to 3.0 m²/g, and optionally is 0.7 m²/g to 2.5 m²/g; (3) the first negative active material includes a carbon-based material, and optionally the carbon-based material includes at least one of artificial graphite, natural graphite, soft carbon, or hard carbon; and (4) the first negative active material includes a carbon-based material and a silicon-based material, optionally a mass percent of the silicon-based material in the first film layer is less than or equal to 75%, and is further preferably 0% to 50%. This further improves the energy density of the negative electrode plate.

In any embodiment, the second negative active material further satisfies one or more of the following conditions (I) to (V): (I) a volume distribution diameter Dv₁₀ of the second negative electrode material is 3 µm to 10 µm, and optionally 3 µm to 8 µm; (II) a volume distribution diameter Dv₉₀ of the second negative electrode material is less than or equal to 35 µm, and preferably 10 µm to 25 µm; (III) a specific surface area SSA of the second negative active material is less than or equal to 2.0 m²/g, and optionally is 0.5 m²/g to 1.6 m²/g; (IV) the second negative active material includes a carbon-based material, and optionally the carbon-based material includes at least one of artificial graphite, natural graphite, soft carbon, or hard carbon; and (V) the second negative active material includes a carbon-based material and a silicon-based material, optionally a mass percent of the silicon-based material in the first film layer is less than or equal to 75%, and is further preferably 0% to 50%. This further improves the energy density of the negative electrode plate.

In any embodiment, a specific surface area SSA of the second negative active material is greater than or equal to a specific surface area SSA of the first negative active material. In addition, the larger the specific surface area of the second negative active material, the easier it is to achieve lithiation to improve the kinetics of the second negative electrode material and further improve the performance of the electrode plate.

In any embodiment, the first negative active material and the second negative active material each independently include artificial graphite and/or natural graphite. Generally, the specific surface area of natural graphite is larger. Therefore, the natural graphite may be used in a larger amount in the second negative active material.

In any embodiment, a compaction density of the first film layer is denoted as PD1', and a compaction density of the second film layer is denoted as PD2', satisfying: 1 < PD17PD2' ≤ 2.0, and optionally 1.03 ≤ PD1'/PD2' ≤ 1.5. The cycle performance of the secondary battery can be improved more reliably by using the specified ratio of the compaction density.

In any embodiment, a compaction density of the negative film layer is 1.35 g/cm³ to 2.5 g/cm³, optionally 1.50 g/cm³ to 2.5 g/cm³; a compaction density PD1' of the first film layer is 1.2 g/cm³ to 2.5 g/cm³, and optionally 1.5 g/cm³ to 2.0 g/cm³; and a compaction density PD2' of the second film layer is 1.0 g/cm³ to 2.0 g/cm³, and optionally 1.2 g/cm³ to 1.65 g/cm³. The cycle performance of the secondary battery can be improved more reliably by using the above compaction density.

In any embodiment of the first aspect, the first film layer and the second film layer each independently include a binder. Optionally, a content of the binder in the first film layer is greater than a content of the binder in the second film layer. Optionally, a mass percent of the binder in the first film layer is denoted as A, and a mass percent of the binder in the second film layer is denoted as B, satisfying: 1 < A/B ≤ 3.5, optionally 1< A/B ≤ 2.2, and further optionally 1 < A/B ≤ 1.9. The binder is usually a polymer insulation substance. In a drying process after coating, the binders in the first film layer and the second film layer are both prone to float to the superficial layer as the solvent volatilizes. Therefore, in view of the characteristics of the binder floating up, the amount of binder in the first film layer is set to be larger than the amount of binder in the second film layer, thereby not only ensuring the kinetic properties of the first negative electrode material in the second film layer, but also effectively alleviating the problem of de-bonding of the active material caused by the floating of the binder in the second film layer. In addition, Dv₅₀ of the second negative electrode material is less than Dv₅₀ of the first negative electrode material, thereby increasing the tortuosity of particle interstices of the second negative electrode material of the second film layer, and in turn, more effectively suppressing the floating of the binder during preparation of the second film layer. In addition, the binder in the first film layer is more than the binder in the second film layer, and is more prone to float to a junction between the two film layers, thereby improving the peel strength between the two film layers.

In any embodiment, a thickness of the first film layer is denoted as h1, and a thickness of the second film layer is denoted as h2, satisfying: 3/7 ≤ h1/h2 ≤ 7/3, and optionally 2/3 ≤ h1/h2 ≤ 3/2. On the one hand, the coating mass can be used to adjust the thickness of the film layer. On the other hand, the film layers formed with the same coating mass also vary in thickness due to a different compaction density. Optionally, 3/7 ≤ h1/h2 ≤ 1/1. Optionally, the thickness of a negative film layer on a single side of the current collector is 30 µm to 150 µm.

In any embodiment, the negative electrode plate further includes a primer. The primer is disposed on at least one surface of the current collector. The first negative film layer is disposed on a surface of the primer, the surface being away from the current collector. The primer effectively increases the bonding area and bonding strength between the negative film layer and the current collector, and reduces the impedance of the negative electrode body.

In any embodiment that includes a primer, the first film layer and the second film layer each independently include a binder. Optionally a mass percent of the binder in the first film layer is denoted as A, and a mass percent of the binder in the second film layer is denoted as B, satisfying: 1 < A/B ≤ 3.5, optionally 1.2 < A/B ≤ 2.5, and further optionally 1.2 < A/B ≤ 1.9, thereby reducing the difference of the binder content between the two film layers, and reducing the dosage of the binder in the first film layer.

In any embodiment, a thickness of the primer is denoted as h0, and a thickness of the first film layer is denoted as h1, satisfying: h1/h0 ≥ 25; The thickness of the primer is controlled by using the above relational expression, so that the energy density of the negative electrode plate is increased maximally on the basis of sufficiently exerting the bonding strength between the negative film layer and the current collector.

In any embodiment, the thickness of the primer is less than or equal to 5 µm, and further, less than or equal to 3 µm, so as to further increase the energy density of the negative electrode plate.

A second aspect of this application provides an electrical device, including a secondary battery. The secondary battery is selected from the secondary batteries disclosed above. The electrical device containing the secondary battery of this application achieves a long lifespan and good cycle performance.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 shows a scanning electron microscopy image of a partial cross-section of a negative electrode plate according to Embodiment 1;
FIG. 2 is a schematic diagram of a secondary battery according to an embodiment of this application;
FIG. 3 is an exploded view of a secondary battery shown in FIG. 2 according to an embodiment of this application;
FIG. 4 is a schematic diagram of a battery module according to an embodiment of this application;
FIG. 5 is a schematic diagram of a battery pack according to an embodiment of this application;
FIG. 6 is an exploded view of a battery pack shown in FIG. 5 according to an embodiment of this application; and
FIG. 7 is a schematic diagram of an electrical device that uses a secondary battery as a power supply according to an embodiment of this application.

The drawings are not drawn to scale.

List of reference numerals:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

The following describes in detail a negative electrode plate, a secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a range of 60 to 120 and a range of 80 to 110 are set out for a given parameter, it is expectable that such ranges may be understood as 60 to 110 and 80 to 120. In addition, if lower-limit values 1 and 2 are set out, and if upper-limit values 3, 4, and 5 are set out, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

### [Secondary battery]

A secondary battery, also known as a rechargeable battery or storage battery, is a battery that is reusable after an active material in the battery is activated by charging the battery that has been discharged.

The secondary battery of this application includes a negative electrode plate. The negative electrode plate includes a current collector and a negative film layer.

Generally, a secondary battery further includes a positive electrode plate, a separator, and an electrolyte solution. During charge and discharge of the battery, active ions (such as lithium ions) are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate while allowing passage of active ions. The electrolyte solution is located between the positive electrode plate and the negative electrode plate, and primarily serves to conduct the active ions.

### [Negative electrode plate]

To increase the energy density of the negative electrode plate, the thickness of the negative film layer is usually increased, or a double-layer film is employed. However, the increase in the thickness of the negative film layer impairs the cycle performance of the battery, and the double-layer film increases the difficulty of infiltrating the two layers of the double-layer film and also impairs the cycle performance of the battery.

Through research, the inventor hereof finds that, by optimizing ingredients of the double-layer film, the difficulty of infiltrating the double-layer film can be reduced, and in turn, the objective of improving the cycle performance of the secondary battery can be achieved. Therefore, the secondary battery disclosed herein includes a negative electrode plate. The negative electrode plate includes a current collector and a negative film layer. The negative film layer includes a first film layer and a second film layer. The first film layer is disposed on at least one surface of the current collector. The first film layer includes a first negative active material. The second film layer is disposed on a surface of the first film layer, where the surface is away from the current collector. The second film layer includes a second negative active material. A volume distribution diameter Dv₅₀ of the first negative active material is greater than a volume distribution diameter Dv₅₀ of the second negative active material, and a powder compaction density of the first negative active material is greater than the powder compaction density of the second negative active material under a same pressure.

Through balanced design of the powder compaction density and particle diameter of the negative active material between an upper film layer and a lower film layer, this application causes the two film layers to compensate each other in terms of porosity and pore size, thereby balancing electrolyte infiltration performance of the two film layers to prevent the upper second film layer from being over-lithiation or over-sodiation, effectively avoiding precipitation of metal on the second film layer, improving the cycle performance of the secondary battery, and increasing the lifespan of the secondary battery. Specifically,

The first negative active material is softer and more compressible than the second negative active material. Therefore, even if the volume distribution diameter Dv₅₀ of the first negative active material is greater than the volume distribution diameter Dv₅₀ of the second negative active material, the powder compaction density of the first negative active material can be greater than the powder compaction density of the second negative active material under a same pressure.

Due to the high powder compaction density of the first negative active material, the porosity of the first film layer is low. The first film layer is balanced by the first negative electrode material with a relatively large Dv₅₀ particle diameter. Large pores exist between large particles of the first negative electrode material, thereby improving the electrolyte infiltration performance of the first film layer in a case of a high compaction density. Due to the relatively high compaction density of the second negative active material, the porosity of the corresponding second film layer is relatively high. The second film layer is balanced by the material with a relatively small Dv₅₀ value that forms small pores. The two negative active materials collaborate with each other to achieve the purpose of balancing the electrolyte infiltration effect between the upper film layer and the lower film layer.

In some embodiments, the volume distribution diameter Dv₅₀ of the first negative active material is denoted as D1, and the volume distribution diameter Dv₅₀ of the second negative active material is denoted as D2, satisfying: 1 < D1/D2 ≤ 3.0, and optionally 1.3 ≤ D1/D2 ≤ 2.8. By further controlling the ratio of Dv₅₀ between the first negative active material and the second negative active material, mechanical adaptability between the two negative active materials is improved, and the energy density of the negative film layer is further increased.

In some embodiments, the powder compaction density of the first negative active material under a pressure of 30000 N is denoted as PD1, and the powder compaction density of the second negative active material under a pressure of 30000 N is denoted as PD2, satisfying: 1 < PD1/PD2 ≤ 2.0, optionally 1.03 ≤ PD1/PD2 ≤ 1.5, and further optionally 1.05 ≤ PD1/PD2 ≤ 1.3. By controlling the ratio of the powder compaction density, the degree of coordination between different layers in terms of the compaction density is improved, thereby further improving the cycle performance of the secondary battery.

A person skilled in the art may select, from commonly used negative active materials, a material that meet any one or more of the above requirements such as the Dv₅₀ requirement and the powder compaction density requirement. In some embodiments, Dv₅₀ of the first negative active material falls within 5 µm to 30 µm, optionally 7 µm to 28 µm, further optionally 8 µm to 26 µm, or 7 µm to 20 µm, or 10 µm to 20 µm, or 10 µm to 15 µm. For example, Dv₅₀ may be 5 µm, 7 µm, 8 µm, 10 µm, 12 µm, 15 µm, 17 µm, 20 µm, 23 µm, 25 µm, 26 µm, 28 µm, or 30 µm. Dv₅₀ of the second negative active material falls within 2 µm to 20 µm, optionally 3 µm to 15 µm, and further optionally 6 µm to 15 µm, or 6 µm to 10 µm. For example, Dv₅₀ of the second negative active material may be 2 µm, 3 µm, 4 µm, 5 µm, 6 µm, 9 µm, 10 µm, 11 µm, 12 µm, 13 µm, 14 µm, 15 µm, 18 µm, or 20 µm.

In some embodiments, the powder compaction density PD1 of the first negative active material under a pressure of 30000 N is 1.2 g/cm³ to 2.5 g/cm³, optionally 1.5 g/cm³ to 2.0 g/cm³, and further optionally, 1.65 g/cm³ to 2.0 g/cm³. Optionally, the powder compaction density PD2 of the second negative active material under a pressure of 30000 N is 1.0 g/cm³ to 2.0 g/cm³, optionally 1.2 g/cm³ to 1.8 g/cm³, further optionally 1.2 g/cm³ to 1.65 g/cm³, and further optionally 1.55 g/cm³ to 1.6 g/cm³. In this way, the first negative active material and the second negative active material are used to collaborate with each other to further improve the electrolyte infiltration performance of the two film layers, and in turn, further improve the cycle performance of the secondary battery. At the same time, the relatively high compaction density is used to increase the energy density of the negative electrode plate.

In some embodiments, the first negative active material further satisfies one or more of the following conditions (1) to (4): (1) a volume distribution diameter Dv₁₀ of the first negative active material is 4 µm to 15 µm, and optionally 5 µm to 11 µm; (2) a volume distribution diameter Dv₉₀ of the first negative active material is less than or equal to 45 µm, and preferably 15 µm to 35 µm; (3) a specific surface area SSA of the first negative active material is less than or equal to 3.0 m²/g, and optionally is 0.7 m²/g to 2.5 m²/g; (3) the first negative active material includes a carbon-based material, and optionally the carbon-based material includes at least one of artificial graphite, natural graphite, soft carbon, or hard carbon; and (4) the first negative active material includes a carbon-based material and a silicon-based material, optionally a mass percent of the silicon-based material in the first film layer is less than or equal to 75%, and is further preferably 0% to 50%.

In some embodiments, the second negative active material further satisfies one or more of the following conditions (I) to (V): (I) a volume distribution diameter Dv₁₀ of the second negative electrode material is 3 µm to 10 µm, and optionally 3 µm to 8 µm; (II) a volume distribution diameter Dv₉₀ of the second negative electrode material is less than or equal to 35 µm, and preferably 10 µm to 25 µm; (III) a specific surface area SSA of the second negative active material is less than or equal to 2.0 m²/g, and optionally is 0.5 m²/g to 1.6 m²/g; (IV) the second negative active material includes a carbon-based material, and optionally the carbon-based material includes at least one of artificial graphite, natural graphite, soft carbon, or hard carbon; and (V) the second negative active material includes a carbon-based material and a silicon-based material, optionally a mass percent of the silicon-based material in the first film layer is less than or equal to 75%, and is further preferably 0% to 50%. This further improves the energy density of the negative electrode plate.

By controlling the volume distribution diameters Dv₁₀ and Dv₉₀ of the first negative active material and/or the second negative active material, the material with a small particle diameter can fill the pores between the particles of the material with a large particle diameter, thereby enabling more flexible adjustment of the compaction density of the film layer.

Specifically, by adjusting the volume distribution diameters of the first negative active material and the second negative active material, the compaction density difference between the first film layer and the second film layer that are formed under the same pressure is easier to control, and the compensation effect for the porosity and pore size of the two film layers is more noticeable. The difference in Dv₁₀ between the first negative electrode material and the second negative electrode material can be relatively small. The difference in the particle size between the first negative electrode material and the second negative electrode material mainly depends on Dv₅₀ and Dv₉₀.

In addition, the problem of deteriorated cycle performance caused by mechanical structure damage of the silicon-based material due to an excessive mass percent of the material can be effectively suppressed by improving the specific capacity of the battery by use of a silicon-based material and by controlling the mass percent of the silicon-based material.

In this application, Dv₁₀, Dᵥ₅₀, and Dv₉₀ of the negative active material bear the meanings well known in the art, and may be measured by a method known in the art. For example, the volume median diameter may be tested by using a laser particle size analyzer (such as Malvern Mastersizer 3000) with reference to the standard GB/T 19077.1-2016.

The physical definitions of Dv₁₀ and Dv₅₀ are as follows:
Dᵥ₁₀ is a corresponding particle diameter of the negative active material when the cumulative volume percent of the measured particles of the material reaches 10% of the total volume of all the sample particles of the material in a volume-based particle size distribution;
Dv₅₀ is a corresponding particle diameter of the negative active material when the cumulative volume percent of the measured particles of the material reaches 50% of the total volume of all the sample particles of the material in a volume-based particle size distribution; and
Dv₉₀ is a corresponding particle diameter of the negative active material when the cumulative volume percent of the measured particles of the material reaches 90% of the total volume of all the sample particles of the material in a volume-based particle size distribution.

The powder compaction density of the negative active material bears a meaning well known in the art, and may be tested by a method known in the art. For example, the powder compaction density may be tested with reference to the standard GB/T 24533-2009 by using an electronic pressure tester (such as UTM7305) to test: putting a specified amount of M powder sample as a test object on a special compaction die (with a bottom area S), setting different pressures (such as 30000 N in this application), keeping each pressure for 30 s, releasing the pressure, waiting for 10 s, reading the thickness H of the powder compacted under this pressure on the tester, and calculating the compaction density of the negative active material under this pressure as: compaction density = M/(H × S).

As an example, the carbon-based material may include at least one of: artificial graphite, natural graphite, soft carbon, hard carbon, or the like. The silicon-based material may be at least one selected from simple-substance silicon, a silicon-oxygen compound, a silicon-carbon composite, a silicon-nitrogen composite, and a silicon alloy. In some embodiments, the first negative electrode material and the second negative electrode material each independently include artificial graphite and/or natural graphite. Generally, the specific surface area of natural graphite is larger. Therefore, the natural graphite may be used in a larger amount in the second negative electrode material.

In some embodiments, a specific surface area SSA of the second negative active material is greater than or equal to a specific surface area SSA of the first negative active material. In addition, the larger the specific surface area of the second negative active material, the easier it is to achieve lithiation to improve the kinetics of the second negative electrode material and further improve the performance of the electrode plate.

In this application, the specific surface area (Specific surface area, SSA) of the negative active material bears a meaning well known in the art, and may be tested by a method known in the art. For example, the specific surface area is measured by using a nitrogen adsorption-based specific surface area analysis method, and is calculated by a Brunauer Emmett Teller (BET) method. The nitrogen adsorption-based specific surface area analysis may be performed by using a Tri Star 3020 specific surface area and pore size analyzer manufactured by the US-based Micromeritics Company.

In any embodiment, a compaction density of the first film layer is denoted as PD 1', and a compaction density of the second film layer is denoted as PD2', satisfying: 1 < PD17PD2' ≤ 2.0, and optionally 1.03 ≤ PD1'/PD2' ≤ 1.5. The cycle performance of the secondary battery can be improved more reliably by using the specified ratio of the compaction density.

In any embodiment, a compaction density of the negative film layer is 1.35 g/cm³ to 2.5 g/cm³, optionally 1.50 g/cm³ to 2.5 g/cm³; a compaction density PD1' of the first film layer is 1.2 g/cm³ to 2.5 g/cm³, and optionally 1.5 g/cm³ to 2.0 g/cm³; and a compaction density PD2' of the second film layer is 1.0 g/cm³ to 2.0 g/cm³, and optionally 1.2 g/cm³ to 1.65 g/cm³. The cycle performance of the secondary battery can be improved more reliably by using the above compaction density. The compaction density of the film layer is a compaction density of a corresponding film layer in a fresh electrode plate.

The test method of the compaction density of the first film layer and the second film layer may be obtained with reference to the following steps (1) to (9):
(1) Taking a prepared negative electrode plate (if the negative electrode plate is obtained from a prepared battery, the battery may be discharged to a 0% SOC first and then disassembled to take out the negative electrode plate);
(2) Testing the cross-sectional view of the negative electrode plate by a scanning electron microscope to obtain the thicknesses of the upper and lower film layers, denoting the thickness of the first film layer as T1 mm, and denoting the thickness of the second film layer as T2 mm;
(3) Die-cutting the electrode plate into discs, where each disc covers an area of 1540.25 mm². Weighing the disc to obtain a weight W0 = (the weight of the upper and lower film layers + the weight of the current collector);
(4) Scraping off the second film layer from both sides of the disc (as can be seen from step (2), the thickness of the second film layer is T2, and therefore, this operation is to scrape off the active material layer with a thickness of T2), and weighing the remaining material (the first film layer + substrate) to obtain a weight W';
(5) Scraping off the first film layer from both sides of the disc, and weighing the remaining current collector to obtain a weight W";
(6) Calculating the coating mass of the first film layer on a single side of the current collector as: CW1 = (W'-W")/2, measured in units of g/1540.25 mm²;
(7) Calculating the coating mass of the second film layer on a single side of the current collector as: CW2 = (WO-W')/2, measured in units of g/1540.25 mm²;
(8) Calculating the compaction density of the first film layer as: PD1' = CW1/(1540.25 × T1) × 1000, measured in units of g/cm³; and
(9) Calculating the compaction density of the second film layer as: PD2' = CW2/(1540.25 × T2) × 1000, measured in units of g/cm³.

In some embodiments, the first film layer and the second film layer each independently include a binder. Optionally, a content of the binder in the first film layer is greater than a content of the binder in the second film layer. Optionally, a mass percent of the binder in the first film layer is denoted as A, and a mass percent of the binder in the second film layer is denoted as B, satisfying: 1 < A/B ≤ 1.2. The binder is usually a polymer insulation substance. In a drying process after coating, the binders in the first film layer and the second film layer are both prone to float to the superficial layer as the solvent volatilizes. Therefore, in view of the characteristics of the binder floating up, the amount of binder in the first film layer is set to be larger than the amount of binder in the second film layer, thereby not only ensuring the kinetic properties of the first negative electrode material in the second film layer, but also effectively alleviating the problem of de-bonding of the active material caused by the floating of the binder in the second film layer. In addition, Dv₅₀ of the second negative active material is less than Dv₅₀ of the first negative active material, thereby increasing the tortuosity of particle interstices of the second negative active material of the second film layer, and in turn, more effectively suppressing the floating of the binder during preparation of the second film layer. In addition, the binder in the first film layer is more than the binder in the second film layer, and is more prone to float to a junction between the two film layers, thereby improving the peel strength between the two film layers. The binder content in the slurry forming the first film layer is greater than the binder content in the slurry forming the second film layer. After floating, the binder content in the first film layer can keep greater than the binder content in the second film layer. Moreover, although the binder is prone to float up, the floating does not cause a fundamental change in the binder content in the first film layer and the second film layer. Therefore, the binder content in the two film layers is adjusted on the basis of the conventional binder content setting to achieve the relative proportion of the binder specified above.

After the powder of the first film layer and the second film layer is detached by scraping, the thermal decomposition mass of the binder is measured by differential thermal and thermogravimetric analysis.

As an example, the binder may be at least one selected from styrenebutadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. As an example, the conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, a thickness of the first film layer is denoted as h1, and a thickness of the second film layer is denoted as h2, satisfying: 3/7 ≤ h1/h2 ≤ 7/3, and optionally 2/3 ≤ h1/h2 ≤ 3/2. On the one hand, the coating mass can be used to adjust the thickness of the film layer. On the other hand, the film layers formed with the same coating mass also vary in thickness due to a different compaction density. Optionally, 3/7 ≤ h1/h2 ≤ 1/1. Optionally, the thickness of the negative film layer on a single side of the current collector is 30 µm to 150 µm.

To increase the bonding strength of the negative film layer to the current collector, in some embodiments, the negative electrode plate further includes a primer. The primer is disposed on at least one surface of the current collector. The first negative film layer is disposed on a surface of the primer, the surface being away from the current collector. The primer effectively increases the bonding area and bonding strength between the negative film layer and the current collector, and reduces the impedance of the negative electrode body.

In any embodiment that includes a primer, the first film layer and the second film layer each independently include a binder. Optionally a mass percent of the binder in the first film layer is denoted as A, and a mass percent of the binder in the second film layer is denoted as B, satisfying: 1 < A/B ≤ 3.5, optionally 1.2 < A/B ≤ 2.5, and further optionally 1.2 < A/B ≤ 1.9, thereby reducing the difference of the binder content between the two film layers, and reducing the dosage of the binder in the first film layer.

In some embodiments, a thickness of the primer is denoted as h0, and a thickness of the first film layer is denoted as h1, satisfying: h1/h0 ≥ 25. The thickness of the primer is controlled by using the above relational expression, so that the energy density of the negative electrode plate is increased maximally on the basis of sufficiently exerting the bonding strength between the negative film layer and the current collector. Optionally, the thickness of the primer is less than or equal to 5 µm, and further, less than or equal to 3 µm, so as to further increase the energy density of the negative electrode plate.

In this application, the thickness of the negative film layer may be measured with a ten-thousandth micrometer, for example, a Mitutoyo293-100 ten-thousandth micrometer with accuracy of 0.1 µm.

In this application, the thicknesses of the primer, the first film layer, and the second film layer may be tested by using a scanning electron microscope (such as ZEISS Sigma300). An exemplary test method is: First, cutting the negative electrode plate into a specimen of a specified size (for example, 2 cm × 2 cm), and fixing the specimen of the negative electrode plate onto a specimen holder by using paraffin; and subsequently, loading the specimen holder onto the specimen rack and locking the rack, powering on an argon ion cross-section polisher (model: IB-19500CP, for example) and performing vacuumizing (at a pressure of 10⁻⁴ Pa, for example), setting the argon flow rate (such as 0.15 MPa), voltage (such as 8 KV), and polishing duration (such as 2 hours), and adjusting the specimen holder to a wobble mode to start polishing. For details of the specimen test procedure, refer to JY/T010-1996. To ensure accuracy of test results, a plurality of (for example, 10) different regions may be selected randomly from a specimen for scanning. The thicknesses of the primer, the first film layer, and the second film layer in a specified test region are measured at a specified magnification (such as 500×). The test results of a plurality of test regions are averaged out, and the average values are the thickness of the primer, the first film layer, and the second film layer respectively.

In some embodiments, the negative current collector may be metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

It is hereby noted that the various parameters tested above may be sampled and tested during preparation of the battery, or may be sampled and tested among the prepared secondary batteries.

As an example, when the specimen is taken from a prepared secondary battery, the sampling may be performed according to the following steps:
(1) Discharging the secondary battery (for safety reasons, the battery is generally caused to be in a fully discharged state); disassembling the battery and taking out a negative electrode plate; soaking the negative electrode plate in dimethyl carbonate (DMC) for a period (for example, 2 to 10 hours); and then taking out the negative electrode plate, drying the negative electrode plate at a specified temperature for a specified time (for example, at 60 °C for 4 hours), and taking out the dried negative electrode plate. At this time, specimens may be taken from the dried negative electrode plate to test various parameters related to the negative film of this application (for example, the thickness of the negative film).
(2) Baking, at a specified temperature for a specified time (for example, at 400 °C for 2 hours), the negative electrode plate dried in step (1); selecting a region arbitrarily on the baked negative electrode plate, taking specimens of the second negative active material (for example, by scraping off the powder with a scraper by a depth not beyond the junction between the first film layer and the second film layer), and then taking specimens of the first negative active material in the same way. During preparation of the negative film layer, a fusion layer may exist at the junction between the first film layer and the second film layer (both the first negative active material and the second negative active material exist in the fusion layer). For accuracy of the test, during sampling of the first negative active material, the fusion layer may be scraped off first, and then the first negative active material is scraped to obtain the powder specimen.
(3) Sieving separately the first negative active material and the second negative active material collected in step (2) (for example, sieving the materials through a 200-mesh sieve) to obtain final specimens of the first negative active material and the specimens of the second negative active material ready for testing the above parameters (for example, particle diameter, specific surface area, and powder compaction density) of the materials of this application.

The position of the junction between the first negative film layer and the second negative film layer may be determined by using an optical microscope or a scanning electron microscope during the sampling.

In addition, it is hereby noted that the parameter ranges of the primer and the negative film layer (such as thicknesses of the primer and the negative film layer) specified herein mean the parameter ranges of a film layer on a single side of the current collector. When the primer or negative film layer is disposed on both surfaces of the negative current collector, the technical solution is considered to fall within the protection scope of this application as long as the parameters of the primer or negative film layer on any one surface of the negative current collector satisfy this application. In addition, the thickness range of the negative film layer mentioned in this application means a parameter of the film layer compacted by cold pressing and ready for assembling a battery.

### [Positive electrode plate]

A positive electrode plate generally includes a positive current collector and a positive film layer that overlays at least one surface of the positive current collector. The positive film layer includes a positive active material.

As an example, the positive current collector includes two surfaces opposite to each other in a thickness direction of the positive current collector. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is in a liquid state and includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. As an example, the additive may include a negative film-forming additive or a positive film-forming additive. The additive may further include an additive capable of improving some performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

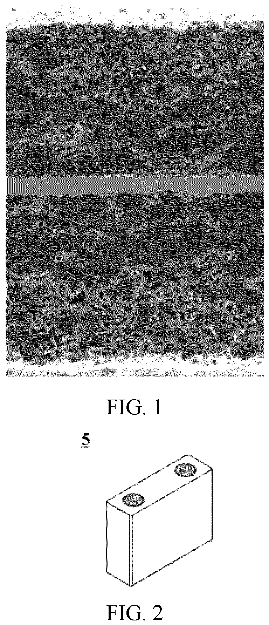

The shape of the secondary battery is not particularly limited in this application, and may be cylindrical, prismatic or any other shape. FIG. 2 shows a prismatic secondary battery 5 as an example.

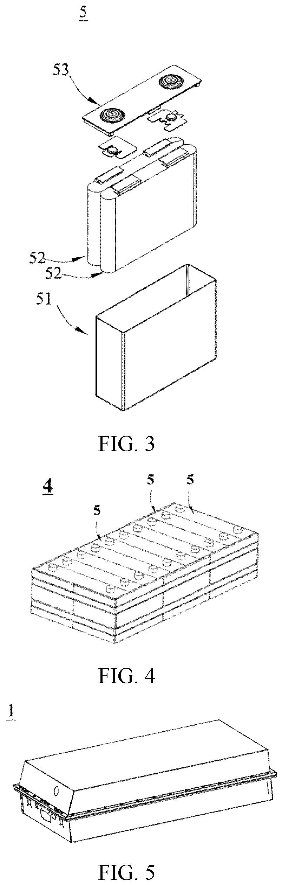

In some embodiments, referring to FIG. 3, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 4 shows a battery module 4 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

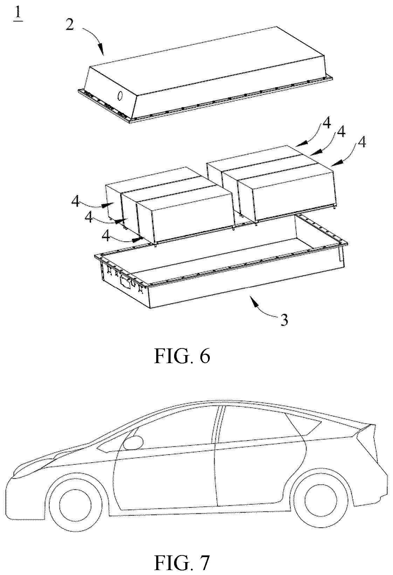

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### 1) Preparing a positive electrode plate

Stirring and mixing well NCM811 as a positive active material, conductive carbon black (Super P) as a conductive agent, and polyvinylidene difluoride (PVDF) as a binder at a mass ratio of 97.5: 1.3: 1.2 in an N-methyl-pyrrolidone (NMP) solvent to obtain a positive electrode slurry. Applying the positive electrode slurry evenly onto both surfaces of a positive current collector, and performing steps such as drying, cold pressing, slitting, and cutting to obtain a positive electrode plate. The areal density of the positive film layer on one side of the positive current collector is 0.250 g/1540.25 mm², and the compaction density is 3.45 g/cm³.

### 2) Preparing a negative electrode plate

The first step is to prepare a first negative electrode slurry: Stirring and mixing well artificial graphite as a first negative active material, SBR as a binder, sodium carboxymethyl cellulose (CMC-Na) as a thickener, and conductive carbon black (Super P) as a conductive agent at a mass ratio of 96.5: 1.8: 1.0: 0.7 in a deionized water solvent to prepare a first negative electrode slurry. The powder compaction density of the artificial graphite under a pressure of 30000 N is 1.75 g/cm³, the volume distribution diameter Dv₅₀ is 8 µm, Dv₁₀ is 6.5 µm, Dv₉₀ is 34.3 µm, and the specific surface area is 1.98 m²/g.

The second step is to prepare a second negative electrode slurry: Stirring and mixing well artificial graphite as a second negative active material, SBR as a binder, sodium carboxymethyl cellulose (CMC-Na) as a thickener, and conductive carbon black (Super P) as a conductive agent at a mass ratio of 96.8: 1.5: 1.0: 0.7 in a deionized water solvent to prepare a second negative electrode slurry. The powder compaction density of the artificial graphite under a pressure of 30000 N is 1.60 g/cm³, the volume distribution diameter Dv₅₀ is 6 µm, Dv₁₀ is 5.6 µm, Dv₉₀ is 19.4 µm, and the specific surface area is 1.08 m²/g.

The third step is to simultaneously extrude the first negative electrode slurry and the second negative electrode slurry to form a wet film through a two-chamber applicator. The first negative electrode slurry is applied on both surfaces of negative current collector copper foil to form a first negative film layer. The second negative electrode slurry is applied on the first negative film layer to form a second negative film layer.

The fourth step is to bake and dry the wet film in different temperature zones of the oven, and then cold-press the film to obtain a negative film layer with a desired compaction density, and then perform steps such as slitting and cutting to obtain a negative electrode plate. A thickness ratio between the first negative film layer and the second negative film layer is 5: 5. The areal density of the negative film layer is 0.180 g/1540.25 mm². The compaction density of the negative film layer is 1.7 g/cm³.

FIG. 1 shows a scanning electron microscope image of a partial cross-section of the negative electrode plate. The first film layer is close to the current collector, and the second film layer is close to the surface. As can be seen from FIG. 1, the pore size of the first film layer is relatively large but the porosity of the first film layer is relatively low. The pore size of the second film layer is relatively small but the porosity of the second film layer is relatively high. Therefore, the pore characteristics of the two film layers are complementary to each other so that the two film layers are infiltrated by the electrolyte solution to a similar effect, thereby improving the cycle capacity retention rate of the battery.

### 3) Separator

Using a PE film as a separator.

### 4) Preparing an electrolyte solution

Mixing ethylene carbonate (EC), ethyl methyl carbonate (EMC), and diethyl carbonate (DEC) at a volume ratio of 1: 1: 1 to obtain an organic solvent, and then dissolving a well-dried lithium salt LiPF₆ at a concentration of 1 mol/L in the organic solvent to obtain an electrolyte solution.

### 5) Preparing a secondary battery

Stacking the positive electrode plate, the separator, and the negative electrode plate sequentially, and winding them to obtain an electrode assembly; placing the electrode assembly into an outer package, injecting the electrolyte solution, and performing steps such as packaging, standing, chemical formation, and aging to obtain a secondary battery.

### Embodiments 2 to 16 and Comparative Embodiments 1 to 3

Preparing the secondary battery by a method similar to Embodiment 1 except that the first negative active material and/or the second negative active material is adjusted, as detailed in Table 1.

### Performance Test for the Battery

### 1. Cycle test

The secondary batteries prepared in each embodiment and each comparative embodiment are charged and discharged for a first time at 25 °C according to the following procedure: Leaving a secondary battery to stand static at a temperature of 25 °C for 30 minutes, and then charging the battery at a constant current of 1 C until the voltage reaches 4.25 V Continuing to charge the battery at a constant voltage until the current drops to or below 0.05 C, and then discharging the battery at a constant current of 1 C until the voltage reaches 2.8 V, and recording the first-cycle discharge capacity C₁.

Subsequently, repeating the cycles of charging and discharging the battery at a current of 0.33 C₁/1 C₁ and in a voltage range of 2.8 V to 4.25 V, and recording the discharge capacity during the cycling. Calculating the capacity retention rate as: N^{th}-cycle capacity retention rate = (N^{th}-cycle discharge capacity/first-cycle discharge capacity) × 100%. Testing the capacity retention rate of the secondary battery cycled at 25 °C for 1000 cycles

**Table 1**

| | First negative active material | | Second negative active material | | Negative film layer | | |
|---|---|---|---|---|---|---|---|
| | Volume distribution diameter Dv₅₀ (D1) | Powder compaction density PD1 | Volume distribution diameter Dv₅₀ (D2) | Powder compaction density (PD2) | D1/D2 | PD 1/PD2 | Capacity retention rate of battery cycled at 25 °C for 1000 cycles |
| Embodiment 1 | 8 | 1.75 | 6 | 1.6 | 1.33 | 1.09 | 92.10% |
| Embodiment 2 | 15.2 | 1.75 | 10.5 | 1.6 | 1.45 | 1.09 | 90.80% |
| Embodiment 3 | 25.3 | 1.75 | 14 | 1.6 | 1.81 | 1.09 | 90.10% |
| Embodiment 4 | 17.5 | 1.75 | 8.1 | 1.6 | 2.16 | 1.09 | 91.50% |
| Embodiment 5 | 25.3 | 1.75 | 10.2 | 1.6 | 2.48 | 1.09 | 91.00% |
| Embodiment 6 | 25.3 | 1.75 | 9.1 | 1.6 | 2.78 | 1.09 | 91.20% |
| Embodiment 7 | 16.4 | 1.6 | 10.8 | 1.55 | 1.52 | 1.03 | 91.60% |
| Embodiment 8 | 16.4 | 1.66 | 10.8 | 1.55 | 1.52 | 1.07 | 92.03% |
| Embodiment 9 | 16.4 | 1.7 | 10.8 | 1.55 | 1.52 | 1.1 | 89.5%% |
| Embodiment 10 | 16.4 | 2.0 | 10.8 | 1.55 | 1.52 | 1.29 | 87.5%% |
| Embodiment 11 | 16.4 | 2.3 | 10.8 | 1.55 | 1.52 | 1.48 | 86.20% |
| Embodiment 12 | 16.4 | 2.5 | 10.8 | 1.55 | 1.52 | 1.61 | 85.50% |
| Embodiment 13 | 16.4 | 3.1 | 10.8 | 1.55 | 1.52 | 2.00 | Excessive compaction density of a lower layer makes the manufacturing process impracticable |
| Embodiment 15 | 25.3 | 1.75 | 23 | 1.6 | 1.1 | 1.09 | 88.30% |
| Embodiment 16 | 16.4 | 1.6 | 10.8 | 1.58 | 1.52 | 1.01 | 88.10% |
| Comparative Embodiment 1 | 10.8 | 1.75 | 16.4 | 1.6 | 0.66 | 1.09 | 88.30% |
| Comparative Embodiment 2 | 16.4 | 1.6 | 10.8 | 1.75 | 1.52 | 0.91 | 85.10% |
| Comparative Embodiment 3 | 10.8 | 1.6 | 16.4 | 1.75 | 0.66 | 0.91 | 85.20% |

As can be seen from the data comparison in Table 1, D1, D2, PD 1, and PD2 all affect the capacity retention rate. When the two negative active materials collaborate with each other and the parameter values fall within the preferred ranges specified herein, the effect in improving the capacity retention rate is noticeable.

After the relevant data of the powder compaction density is determined, the capacity retention rate can be improved by adjusting the particle size distribution of the materials. For example, in Embodiment 3, Embodiment 5, and Embodiment 6, after Dv₅₀ of the first negative active material is determined, with the decrease of Dv₅₀ of the second negative active material, the pores in the film layer formed by the two negative active materials are more complementary, and improve the capacity retention rate more effectively. In Embodiment 2 and Embodiment 5, when Dv₅₀ of the second negative active material is similar, with the increase of Dv₅₀ of the first negative active material, the pores in the film layer formed by the two negative active materials are more complementary, and improve the capacity retention rate more effectively.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A secondary battery, comprising a negative electrode plate, wherein the negative electrode plate comprises a current collector and a negative film layer, and the negative film layer comprises:
a first film layer, disposed on at least one surface of the current collector, wherein the first film layer comprises a first negative active material;
a second film layer, disposed on a surface of the first film layer, wherein the surface is away from the current collector, and the second film layer comprises a second negative active material; and
a volume distribution diameter Dv₅₀ of the first negative active material is greater than a volume distribution diameter Dv₅₀ of the second negative active material, and a powder compaction density of the first negative active material is greater than the powder compaction density of the second negative active material under a same pressure.

2. The secondary battery according to claim 1, wherein the volume distribution diameter Dv₅₀ of the first negative active material is denoted as D1, and the volume distribution diameter Dv₅₀ of the second negative active material is denoted as D2, satisfying: 1 < D1/D2 ≤ 3.0, and optionally 1.3 ≤ D1/D2 ≤ 2.8.

3. The secondary battery according to claim 1 or 2, wherein the powder compaction density of the first negative active material under a pressure of 30000 N is denoted as PD1, and the powder compaction density of the second negative active material under a pressure of 30000 N is denoted as PD2, satisfying: 1 < PD1/PD2 ≤ 2.0, optionally 1.03 ≤ PD1/PD2 ≤ 1.5, and further optionally 1.05 ≤ PD1/PD2 ≤ 1.3.

4. The secondary battery according to any one of claims 1 to 3, wherein the volume distribution diameter Dv₅₀ of the first negative electrode material is 5 µm to 30 µm, optionally 7 µm to 28 µm, and further optionally 8 µm to 26 µm; and/or
the volume distribution diameter Dv₅₀ of the second negative active material is 2 µm to 20 µm, optionally 3 µm to 15 µm, and further optionally 6 µm to 15 µm.

5. The secondary battery according to any one of claims 1 to 4, wherein the powder compaction density PD1 of the first negative active material under a pressure of 30000 N is 1.2 g/cm³ to 2.5 g/cm³, and optionally 1.5 g/cm³ to 2.0 g/cm³; and/or
the powder compaction density PD2 of the second negative active material under a pressure of 30000 N is 1.0 g/cm³ to 2.0 g/cm³, optionally 1.2 g/cm³ to 1.65 g/cm³, and further optionally 1.55 g/cm³ to 1.6 g/cm³.

6. The secondary battery according to any one of claims 1 to 5, wherein the first negative active material further satisfies one or more of the following conditions (1) to (4):
(1) a volume distribution diameter Dv₁₀ of the first negative active material is 4 µm to 15 µm, and optionally 5 µm to 11 µm;
(2) a volume distribution diameter Dv₉₀ of the first negative active material is less than or equal to 45 µm, and preferably 15 µm to 35 µm;
(3) a specific surface area SSA of the first negative active material is less than or equal to 3.0 m²/g, and optionally is 0.7 m²/g to 2.5 m²/g;
(3) the first negative active material comprises a carbon-based material, and optionally the carbon-based material comprises at least one of artificial graphite, natural graphite, soft carbon, or hard carbon; and
(4) the first negative active material comprises a carbon-based material and a silicon-based material, optionally a mass percent of the silicon-based material in the first film layer is less than or equal to 75%, and is further preferably 0% to 50%.

7. The secondary battery according to any one of claims 1 to 6, wherein the second negative active material further satisfies one or more of the following conditions (I) to (V):
(I) a volume distribution diameter Dv₁₀ of the second negative electrode material is 3 µm to 10 µm, and optionally 3 µm to 8 µm;
(II) a volume distribution diameter Dv₉₀ of the second negative electrode material is less than or equal to 35 µm, and preferably 10 µm to 25 µm;
(III) a specific surface area SSA of the second negative active material is less than or equal to 2.0 m²/g, and optionally is 0.5 m²/g to 1.6 m²/g;
(IV) the second negative active material comprises a carbon-based material, and optionally the carbon-based material comprises at least one of artificial graphite, natural graphite, soft carbon, or hard carbon; and
(V) the second negative active material comprises a carbon-based material and a silicon-based material, optionally a mass percent of the silicon-based material in the first film layer is less than or equal to 75%, and is further preferably 0% to 50%.

8. The secondary battery according to any one of claims 1 to 7, wherein a specific surface area SSA of the second negative active material is greater than or equal to a specific surface area SSA of the first negative active material.

9. The secondary battery according to any one of claims 1 to 8, wherein the first negative active material and the second negative active material each independently comprise artificial graphite and/or natural graphite.

10. The secondary battery according to any one of claims 1 to 9, wherein a compaction density of the first film layer is denoted as PD 1', and a compaction density of the second film layer is denoted as PD2', satisfying: 1 < PD 1 '/PD2' ≤ 2.0, and optionally 1.03 ≤ PD1'/PD2' ≤ 1.5.

11. The secondary battery according to any one of claims 1 to 10, wherein a compaction density of the negative film layer is 1.35 g/cm³ to 2.5 g/cm³, optionally 1.50 g/cm³ to 2.5 g/cm³; a compaction density PD1' of the first film layer is 1.2 g/cm³ to 2.5 g/cm³, and optionally 1.5 g/cm³ to 2.0 g/cm³; and a compaction density PD2' of the second film layer is 1.0 g/cm³ to 2.0 g/cm³, and optionally 1.2 g/cm³ to 1.65 g/cm³.

12. The secondary battery according to any one of claims 1 to 11, wherein the first film layer and the second film layer each independently comprise a binder, and a content of the binder in the first film layer is greater than a content of the binder in the second film layer; and
optionally, a mass percent of the binder in the first film layer is denoted as A, and a mass percent of the binder in the second film layer is denoted as B, satisfying: 1 < A/B ≤ 3.5, optionally 1< A/B ≤ 2.2, and further optionally 1 < A/B ≤ 1.9.

13. The secondary battery according to any one of claims 1 to 12, wherein a thickness of the first film layer is denoted as h1, and a thickness of the second film layer is denoted as h2, satisfying: 3/7 ≤ h1/h2 ≤ 7/3, and optionally 2/3 ≤ h1/h2 ≤ 3/2.

14. The secondary battery according to any one of claims 1 to 13, wherein the negative electrode plate further comprises a primer, and the primer is disposed between the current collector and the first negative film layer;
optionally, a thickness of the primer is denoted as h0, and a thickness of the first film layer is denoted as h1, satisfying: h1/h0 ≥ 25;
optionally, the thickness of the primer is less than or equal to 5 µm; and
optionally, the first film layer and the second film layer each independently comprise a binder, optionally a mass percent of the binder in the first film layer is denoted as A, and a mass percent of the binder in the second film layer is denoted as B, satisfying: 1 < A/B ≤ 3.5, optionally 1.2 < A/B ≤ 2.5, and further optionally 1.2 < A/B ≤ 1.9.

15. An electrical device, comprising the secondary battery according to any one of claims 1 to 14.
